# EUROPÄISCHE PATENTSCHRIFT

(11) **EP 3 140 230 B1**
(45) Veröffentlichungstag und Bekanntmachung des Hinweises auf die Patenterteilung: **18.09.2019**
(21) Anmeldenummer: 15720715.0
(22) Anmeldetag: 05.05.2015
(51) Int. Cl.: B65G 59/06, B65G 1/08

(54) **WARENÜBERGABEVORRICHTUNG SOWIE WARENLAGER MIT WARENÜBERGABEVORRICHTUNG**
GOODS TRANSFER DEVICE AND GOODS STORE WITH GOODS TRANSFER DEVICE
DISPOSITIF DE TRANSFERT DE MARCHANDISES AINSI QU'ENTREPÔT MUNI D'UN DISPOSITIF DE TRANSFERT DE MARCHANDISES

(30) Priorität: 06.05.2014 DE 102014208405
(43) Veröffentlichungstag der Anmeldung: 15.03.2017
(73) Patentinhaber: Gebr. Willach GmbH, 53809 Ruppichteroth (DE)
(72) Erfinder: WILLACH, Jens, 53783 Eitorf (DE); MÜLLER, Hans-Friedrich, 53809 Ruppichteroth (DE)
(74) Vertreter: dompatent von Kreisler Selting Werner - Partnerschaft von Patent- und Rechtsanwälten mbB
(86) Internationale Anmeldenummer: PCT/EP2015/059792
(87) Internationale Veröffentlichungsnummer: WO 2015/169780

(56) Entgegenhaltungen:
- EP-A1- 0 213 360
- EP-A1- 0 870 704
- DE-A1- 4 107 333
- DE-U1-202008 012 069
- FR-A1- 2 696 722
- FR-A1- 2 820 412
- US-B1- 6 247 890

## Beschreibung

Die vorliegende Erfindung betrifft eine Warenübergabevorrichtung für ein vorzugsweise automatisches Warenlager sowie ein Warenlager mit einer Warenübergabevorrichtung.

Es ist bekannt, dass Lagerflächen, wie beispielsweise Kanallager, mit Lagerkanälen über einen Manipulator befüllt werden. Dabei wird das Eingabeende der Lagerfläche von dem Manipulator angefahren und die Gegenstände werden an die Lagerplätze übergeben. Derartige Lager werden häufig für Waren, beispielsweise Medikamente in Apotheken, eingesetzt. Besonders geeignet für schnelldrehende Waren sind Schrägfachbodenregale, bei denen die einzelnen Waren in Kanälen, die durch seitliche Begrenzungen getrennt sind, auf einer Lagerfläche, die gegenüber einer Horizontalen geneigt ist, enthalten sind. Bei Entnahme eines unteren Gegenstandes rutschen die übrigen Gegenstände nach. In der Regel sind in jedem Kanal gleichartige Gegenstände enthalten. Die Gegenstände weisen beispielsweise quaderförmige Packungen auf, wobei Packungen gleichen Formats in einen Kanal eingebracht werden, dessen Kanalbreite auf die Packungsgröße abgestimmt ist. Auf derartigen Lagerflächen können jedoch auch Waren unterschiedlicher Form, z.B. Zylinder, und unterschiedlichen Formats innerhalb desselben Kanals gespeichert werden.

Üblicherweise befüllen die Manipulatoren die Lagerplätze, sobald eine vorgegebene Anzahl von Waren aus einem Lagerkanal entnommen worden ist. Dazu wird ein Manipulator mit mehreren der nachzufüllenden Gegenständen befüllt und der Manipulator fährt das Eingabeende der entsprechenden Lagerfläche an, um die Gegenstände zu übergeben.

Um die Nachfüllfunktion der Lagerflächen auf zuverlässige Weise zu gewährleisten, muss sichergestellt werden, dass die Manipulatoren geordnet mit den einzulagernden Gegenständen befüllt werden. Da bekannte Manipulatoren mit einer sehr hohen Geschwindigkeit innerhalb eines Lagers bewegt werden, ist eine manuelle Bestückung der Manipulatoren mit einem großen Sicherheitsrisiko verbunden. Daher werden zumeist Übergabevorrichtungen verwendet, in die die Gegenstände manuell oder automatisch eingelegt werden. Die Manipulatoren übernehmen die einzulagernden Gegenstände von der Übergabevorrichtung, um anschließend den vorgegebenen Lagerplatz anzufahren.

In der Praxis wird häufig eine sehr schnelle Befüllung eines Lagers gefordert. Daher werden mehrere zumeist gleichartige Gegenstände von dem Manipulator gleichzeitig transportiert. Um eine schnelle Befüllung des Manipulators zu ermöglichen, werden daher an einer Übergabevorrichtung die von einem Manipulator zu transportierenden Gegenstände für einen kurzen Zeitraum gelagert. Das Einlegen der Gegenstände in die Übergabevorrichtung muss ebenfalls in einer großen Geschwindigkeit erfolgen. Daher ist sicherzustellen, dass die an den Manipulator zu übergebenden Gegenstände geordnet in der Übergabevorrichtung bereit gehalten werden.

Bei dem manuellen Einlegen von Gegenständen in die Übergabevorrichtung besteht darüber hinaus die Gefahr, dass der Bediener mit seiner Hand in den Verfahrweg des Manipulators gerät, wodurch ein Verletzungsrisiko gegeben ist.

Die Anmelderin hat daher eine Warenübergabevorrichtung entwickelt und unter dem Aktenzeichen DE 10 2013 218 538 zum Patent angemeldet, bei der mindestens ein Übergabekanal mit einer Eingabeseite zum Eingeben von Waren und einer Ausgabeseite zur Übergabe der Waren an das Warenlager vorgesehen ist. Der Übergabekanal weist eine Transportfläche auf, auf der die Waren von der Eingabeseite zu der Ausgabeseite transportierbar sind. Dazu ist vorgesehen, dass die Transportfläche in Richtung zu der Ausgabeseite hin gegenüber einer Horizontalfläche geneigt ist. Ferner weist der Übergabekanal eine seitliche Führungsfläche auf, wobei die Transportfläche auch in Richtung der seitlichen Führungsfläche mit einem Neigungswinkel gegenüber der Horizontalfläche geneigt ist. Der Neigungswinkel der Auflagefläche in Richtung zu der Führungsfläche ist dabei veränderbar, so dass der Übergabekanal eine Wareneingabestellung und eine Warenausgabestellung besitzt. Mittels der Warenübergabevorrichtung ist ein schnelles Einlegen von Gegenständen möglich, wobei ferner eine schnelle und zuverlässige Übergabe der Gegenstände an das Warenlager gewährleistet ist.

Die Neigung der Auflagefläche zu der Führungsfläche hin bewirkt, dass die eingegebenen Waren in einer geordneten Reihe hintereinander angeordnet werden. In der Warenausgabestellung ist der Neigungswinkel zu der Führungsfläche jedoch geringer, so dass eine Ordnung der Waren beim Eingeben nicht gegeben ist. Daher ist ein Eingeben der Waren in den Übergabekanal in seiner Warenausgabestellung ungünstig und in der Warenausgabestellung sollten keine Waren eingegeben werden. Dadurch kann es zu Zeitverlust kommen, da der Benutzer teilweise keine Waren eingeben kann. Ferner ist die Anzahl von Waren, die in einen Übergabekanal eingegeben werden können und somit in diesem bereit gehalten werden können, relativ gering.

Es hat sich jedoch herausgestellt, dass bei manchen Warenlagern eine Warenübergabevorrichtung von Vorteil wäre, bei der zu jedem Zeitpunkt Waren eingegeben werden können und in der eine relativ große Anzahl von Waren zur Übergabe an das automatische Warenlager bereit gehalten werden kann.

FR 2696722 A1, EP 0870704 A1 und EP 0213360 A1 zeigen jeweils Warenübergabeeinrichtungen. EP 0 870 704 A1 zeigt eine Warenübergabeeinrichtung nach dem Oberbegriff von Anspruch 1.

Es ist daher die Aufgabe der vorliegenden Erfindung, eine Übergabevorrichtung für ein Warenlager zu schaffen, bei dem ein schnelles Einlegen von Gegenständen zu jeder Zeit möglich ist, wobei gleichzeitig eine schnelle und zuverlässige Übergabe der Gegenstände an ein Warenlager gewährleistet ist und wobei eine große Anzahl von Gegenständen in der Übergabevorrichtung bereit gehalten werden kann. Die Übergabevorrichtung sollte darüber hinaus eine möglichst hohe Sicherheit für den Bediener bieten. Es ist ferner die Aufgabe der vorliegenden Erfindung, ein Warenlager mit einer derartigen Übergabevorrichtung zu schaffen.

Die erfindungsgemäße Warenübergabevorrichtung ist durch die Merkmale des Anspruchs 1 definiert. Das erfindungsgemäße Warenlager ist durch die Merkmale des Anspruchs 15 definiert.

Eine erfindungsgemäße Warenübergabevorrichtung für ein vorzugsweise automatisches Warenlager weist zum Eingeben von Waren in das automatische Warenlager mindestens einen Übergabekanal mit einer Eingabeseite zum Eingeben von Waren und einer Ausgabeseite zur Übergabe der Waren an das Warenlager auf. Der Übergabekanal weist eine Transportfläche auf, auf der die Waren von der Eingabeseite zu der Ausgabeseite transportierbar sind. Die Erfindung ist dadurch gekennzeichnet, dass über dem Übergabekanal eine Wareneingabeeinrichtung mit mindestens einem Stapelkanal angeordnet ist, in dem Waren stapelbar sind, wobei die Transportfläche des Übergabekanals einen Boden des Stapelkanals bildet, und dass in dem Übergabekanal eine Transportvorrichtung angeordnet ist, die eine auf der Transportfläche liegende Ware in Richtung der Ausgabeseite transportiert.

Mit anderen Worten: Die unterste Ware der in dem Stapelkanal aufgenommenen Waren liegt auf der Transportfläche auf und wird von der Transportvorrichtung zur Ausgabeseite hin transportiert. Dabei rutschen die in dem Stapelkanal aufgenommenen Waren schwerkraftbedingt nach.

Die erfindungsgemäße Warenübergabevorrichtung ermöglicht somit, dass eine große Anzahl von Waren in der Warenübergabevorrichtung bereit gehalten werden können, da in dem Stapelkanal eine Vielzahl der Waren platzsparend angeordnet werden kann. Ein Bediener kann mehrere Waren gleichzeitig in den Stapelkanal einlegen, indem er beispielsweise beim Aufnehmen der Waren bereits kleine Türme von Waren bildet, die er in den Stapelkanal einsetzt. Dadurch ist ein schnelles Einlegen von Waren in die Warenübergabevorrichtung möglich.

Durch das Vorsehen der Transportvorrichtung, die eine auf der Transportfläche liegende Ware in Richtung der Ausgabeseite transportiert, können die Waren schnell und auf zuverlässige Weise an das Warenlager übergeben werden. Dadurch, dass die Transportfläche des Übergabekanals einen Boden des Stapelkanals bildet und somit immer die unterste Ware eines Stapelkanals als nächstes zu der Ausgabeseite hin transportiert wird, wobei die weiteren in dem Stapelkanal aufgenommenen Waren schwerkraftbedingt nachrutschen, kann sogar ein kurzzeitiges Puffern der Waren in der Warenübergabevorrichtung erreicht werden. Die Waren können somit automatisch an einen Manipulator zum Einlagern in das Warenlager übergeben werden. Ein Bediener kann sich dadurch bei gefüllten Stapelkanälen beispielsweise kurzzeitig anderen Aufgaben widmen, ohne dass der Einlagerungsvorgang unterbrochen wird. Dadurch ist ein besonders flexibler Einsatz der erfindungsgemäßen Warenübergabevorrichtung möglich.

Bei der erfindungsgemäßen Warenübergabevorrichtung ist vorgesehen, dass die Transportfläche des Übergabekanals zu der Ausgabeseite hin gegenüber einer Horizontalfläche geneigt ist, wobei ein erster Abschnitt des Übergabekanals, in dem die Transportvorrichtung angeordnet ist, in einem ersten Winkel gegenüber der Horizontalfläche geneigt ist oder horizontal angeordnet ist, wohingegen ein zweiter Abschnitt der Transportfläche in einem zweiten Winkel gegenüber der Horizontalfläche geneigt ist, wobei der Neigungswinkel des zweiten Abschnitts größer ist als der Neigungswinkel des ersten Abschnitts.. Dadurch kann erreicht werden, dass die Transportvorrichtung nicht über die gesamte Länge des Übergabekanals angeordnet sein muss und die auf der Transportfläche zu transportierenden Waren dennoch schwerkraftbedingt zu der Ausgabeseite hin transportiert werden. Dabei sollte der Stapelkanal über den ersten Abschnitt des Übergabekanals angeordnet sein, um zu gewährleisten, dass die Transportvorrichtung Waren aus dem Stapelkanal entlang der Transportfläche transportieren kann. Der Stapelkanal ist vorzugsweise in einem rechten Winkel zu dem Übergabekanal, jedoch zumindest in einem Winkelbereich zwischen 85° und 95°, angeordnet, um die in dem Stapelkanal anzuordnenden Waren derart zu stapeln, dass sie auf zuverlässige Art und Weise von der Transportvorrichtung in Richtung des Ausgabeendes des Übergabekanals transportiert werden können. Daher ist es von Vorteil, wenn der erste Abschnitt des Übergabekanals, über dem der Stapelkanal angeordnet ist, eine möglichst geringe Neigung gegenüber der Horizontalfläche aufweist, um zu verhindern, dass die Wareneingabeeinrichtung eine zu große Erstreckung in eine horizontale Richtung besitzt, wodurch der Platzbedarf der gesamten Warenübergabevorrichtung vergrößert werden würde.

Vorzugsweise ist vorgesehen, dass der Stapelkanal eine Rückwand, eine erste Seitenwand und eine zweite Seitenwand aufweist. Der Stapelkanal kann somit in vorteilhafter Weise auf der dem Benutzer zugewandten Seite offen ausgestaltet sein, so dass die Waren auf einfache Art und Weise in den Stapelkanal eingegeben werden können. Die Rückwand, die erste Seitenwand und die zweite Seitenwand gewährleisten, dass die in den Stapelkanal eingegebenen Waren geordnet gestapelt sind und nicht verkanten, indem die Rückwand, die erste Seitenwand und/oder die zweite Seitenwand die Waren führen.

Zwischen der Rückwand des Stapelkanals und der Transportfläche des Übergabekanals bildet der Übergabekanal eine Öffnung, durch die die Waren in Richtung der Ausgabeseite transportiert werden können.

In einem besonders bevorzugten Ausführungsbeispiel der Erfindung ist vorgesehen, dass der Stapelkanal eine Breitenverstelleinrichtung aufweist, über die die Breite des Stapelkanals an unterschiedliche Warengrößen, insbesondere Warenbreiten, anpassbar ist. Dies kann dadurch erreicht werden, indem beispielsweise die erste und/oder die zweite Seitenwand zur Breitenverstellung in Richtung der jeweils anderen Seitenwand verschiebbar ist. Durch das Vorsehen einer Breitenverstelleinrichtung, über die die Breite des Stapelkanals verstellbar ist, wird erreicht, dass Waren unterschiedlicher Warengrößen über die Warenübergabevorrichtung eingegeben werden können.

Der Stapelkanal kann über die Breitenverstelleinrichtung insbesondere an das Nennmaß, insbesondere in Breitenrichtung, der Ware angepasst werden, d.h. dass der Stapelkanal beispielsweise mindestens zwei Millimeter breiter, vorzugsweise 6-8 mm breiter, als das Nennmaß der Ware ist. Dadurch wird sichergestellt, dass die Ware einzeln oder bereits vorgestapelt auf einfache Art und Weise in den Stapelkanal eingegeben werden kann, wobei gleichzeitig ein Verkanten der Ware verhindert wird, so dass die Waren schwerkraftbedingt nachrutschen können.

Durch das Vorsehen einer verschiebbar ausgestalteten ersten und/oder zweiten Seitenwand lässt sich die Breite des Stapelkanals auf besonders einfache Art und Weise gewährleisten.

In einem weiteren, besonders bevorzugten Ausführungsbeispiel der Erfindung ist vorgesehen, dass der Übergabekanal eine Höhenverstelleinrichtung aufweist, über die die Höhe des Übergabekanals in zunächst einem Abschnitt des Übergabekanals an unterschiedliche Warenhöhen anpassbar ist. Dadurch kann bei der Verwendung der Warenübergabevorrichtung mit Waren unterschiedlicher Warenhöhen sichergestellt werden, dass beim Transport der Ware über die Transportfläche des Übergabekanals tatsächlich nur eine Ware bewegt wird und die anderen Waren in dem Stapelkanal zurückgehalten werden. Dabei erfolgt eine Vereinzelung der Waren, so dass diese von einem in dem Stapelkanal gestapelten Zustand vereinzelt werden können und in eine Reihe von Waren in den Übergabekanal angeordnet werden können, wodurch die Waren in vorteilhafter Weise an das Warenlager, beispielsweise an einen das Warenlager bedienenden Manipulator, übergeben werden können.

Die Höhe des Übergabekanals kann beispielsweise an das Nennmaß der Ware angepasst sein. Beispielsweise kann die Höhe des Übergabekanals derart angepasst sein, dass diese Höhe größer ist als die Höhe einer einzugebenden Ware, jedoch kleiner als das Doppelte der Höhe dieser Ware.

Vorzugsweise ist vorgesehen, dass die Höhenverstelleinrichtung eine Platte aufweist, die an der Rückwand des Stapelkanals angeordnet ist und in Richtung zu der Transportfläche des Übergabekanals verstellbar ist.

Über die Platte, die an der Rückwand des Stapelkanals angeordnet ist, lässt sich die Höhe des Übergabekanals in vorteilhafter Weise einstellen. Zur Verringerung der maximalen Warenhöhen der Waren, die durch den Übergabekanal transportierbar sind, wird die Platte in Richtung der Transportfläche verstellt. Um größere Warenhöhen zu ermöglichen, kann die Platte von der Transportfläche wegbewegt werden.

Vorzugsweise ist vorgesehen, dass die Platte verschwenkbar gelagert ist. Auf diese Weise ist die Platte auf konstruktiv einfache Art und Weise an der Rückwand lagerbar, wobei gleichzeitig die Höhenverstellung auf einfache Art und Weise durch ein Verschwenken der Platte erfolgen kann.

In einem bevorzugten Ausführungsbeispiel der Erfindung ist vorgesehen, dass eine verschiebbar ausgebildete Seitenwand des Stapelkanals mindestens einen Führungsarm aufweist, der die Rückwand des Stapelkanals durchdringt und der auf der von dem Stapelkanal abgewandten Seite der Wareneingabeeinrichtung gelagert ist. Auf diese Weise ist die Seitenwand in vorteilhafter Weise lagerbar, wobei die Lagerung der verschiebbar ausgebildeten Seitenwand auf der von dem Benutzer abgewandten Seite der Wareneingabeeinrichtung angeordnet ist. Dadurch wird verhindert, dass der Benutzer beim Einlegen der Waren die Lagerung der Seitenwand beschädigt, oder das Verletzungsrisiko des Benutzers beim Verschieben der Seitenwand wird verringert.

Dabei kann vorgesehen sein, dass der Führungsarm in mindestens einer ersten Führungsschienenvorrichtung, vorzugsweise in einer ersten und einer zweiten Führungsschienenvorrichtung, gelagert ist. Die erste und die zweite Führungsschienenvorrichtung sind vorzugsweise in vertikaler Richtung voneinander beabstandet und parallel angeordnet. Über die erste Führungsschienenvorrichtung bzw. die erste und die zweite Führungsschienenvorrichtung lässt sich der Führungsarm in vorteilhafter Weise verschiebbar lagern. Es kann vorgesehen sein, dass der Führungsarm in einer ersten Führungsschienenvorrichtung mittels eines ersten Lagers verschiebbar gelagert ist und in der zweiten Führungsschienenvorrichtung mittels eines Führungsschlittens mit zwei Führungslagern gelagert ist. Dadurch ist eine besonders stabile Lagerung des Führungsarms möglich. Dabei kann vorgesehen sein, dass zwischen den zwei Führungslagern des Führungsschlittens ein horizontaler Abstand parallel zu der Rückwand besteht. Dadurch sind die Lagerpunkte des Führungsschlittens voneinander beabstandet, so dass eine hohe Kippstabilität des Führungsarms und somit der Seitenwand erreicht werden kann.

Erfindungsgemäß ist vorgesehen, dass die Breite des Übergabekanals verstellbar ist. Dabei ist vorgesehen, dass der Übergabekanal mindestens eine Übergabekanalseitenwand aufweist, die verschiebbar ist. Vorzugsweise ist vorgesehen, dass die Übergabekanalseitenwand mit dem Führungsarm der Seitenwand des Stapelkanals verbunden ist. Auf diese Weise lassen sich die Seitenwand des Stapelkanals und die Übergabekanalseitenwand gleichzeitig und beispielsweise über einen Antrieb verschieben.

Durch die Einstellbarkeit der Breite des Übergabekanals kann der Übergabekanal an unterschiedliche Warengrößen angepasst werden, so dass die über die Transportvorrichtung auf der Transportfläche transportierten Waren in vorteilhafter Weise in dem Übergabekanal geführt werden und nicht zu verkanten drohen.

In einem Ausführungsbeispiel der Erfindung ist vorgesehen, dass die Breitenverstelleinrichtung eine erste Rastvorrichtung aufweist, mittels der die Breitenverstelleinrichtung des Stapelkanals in vorgegebenen Breitenschritten arretierbar ist. Auf diese Weise kann sichergestellt werden, dass eine eingestellte Breite des Stapelkanals nach Einstellung beibehalten wird, da die Rastvorrichtung eine ungewollte Verstellung der Breite des Stapelkanals verhindert. Bei einem Ausführungsbeispiel der Erfindung, bei dem eine Übergabekanalseitenwand mit dem Führungsarm der Seitenwand des Stapelkanals verbunden ist, erfolgt eine Arretierung der Übergabekanalseitenwand ebenfalls über die erste Rastvorrichtung.

Es kann auch vorgesehen sein, dass die Höhenverstelleinrichtung eine zweite Rastvorrichtung aufweist, mittels der die Höhenverstelleinrichtung des Übergabekanals in vorgegebenen Höhenschritten arretierbar ist. Mittels der zweiten Rastvorrichtung kann somit bei der Höhenverstelleinrichtung sichergestellt werden, dass eine eingestellte Höhe des Übergabekanals beibehalten wird und nicht ungewollt verstellt wird.

Durch die erste Rastvorrichtung für die Breitenverstelleinrichtung und/oder durch die zweite Rastvorrichtung für die Höhenverstelleinrichtung wird somit erreicht, dass die Warenübergabevorrichtung in zuverlässiger Weise bedient werden kann und eine zuverlässige Funktion nicht durch eine ungewollte Verstellung der Breiten- und/oder Höhenverstellung des Stapelkanals gestört wird.

In einem besonders bevorzugten Ausführungsbeispiel der Erfindung ist vorgesehen, dass die Warenübergabevorrichtung einen Linearantrieb aufweist, der den Antrieb der Breitenverstelleinrichtung und/oder der Höhenverstelleinrichtung bildet. Dabei kann vorgesehen sein, dass die Breitenverstelleinrichtung und die Höhenverstelleinrichtung einen gemeinsamen Linearantrieb aufweisen, oder dass jeweils ein separater Linearantrieb für jede Verstelleinrichtung vorgesehen ist. Über einen Linearantrieb lassen sich die Breitenverstelleinrichtung und die Höhenverstelleinrichtung auf konstruktiv einfache Art und Weise antreiben. Da ein Linearantrieb sehr genau und auf einfache Art und Weise ansteuerbar ist, lässt sich die Breitenverstelleinrichtung des Stapelkanals und/oder die Höhenverstelleinrichtung des Übergabekanals auf einfache Art und Weise und sehr genau steuern.

Dabei kann vorgesehen sein, dass der Linearantrieb einen Antriebsschlitten aufweist, der auf der von dem Stapelkanal abgewandten Seite an der Wareneingabeeinrichtung verfahrbar ist, vorzugsweise in horizontaler Richtung parallel zu der Rückwand. Dadurch wird erreicht, dass der Linearantrieb auf der von dem Benutzer abgewandten Seite des Stapelkanals an der Wareneingabeeinrichtung angeordnet ist, so dass der Benutzer bei der Bedienung der Warenübergabevorrichtung nicht in den Verfahrweg des Linearantriebs gelangt. Dadurch werden Störungen des Linearantriebs vermieden und darüber hinaus ist die Verletzungsgefahr des Benutzers deutlich reduziert.

Es kann beispielsweise vorgesehen sein, dass der Linearantrieb an der Rückwand des Stapelkanals angeordnet ist, so dass diese den Zugriff des Benutzers auf den Linearantrieb verhindert.

Der Antriebsschlitten kann mindestens einen Riegel aufweisen, der in die Breitenverstelleinrichtung und/oder die Höhenverstelleinrichtung eingreift. Auf diese Weise kann der Antriebsschlitten mit der Breitenverstelleinrichtung und/oder Höhenverstelleinrichtung verbunden werden, um diese zu verstellen. Der Antriebsschlitten kann beispielsweise auch zwei separate Riegel aufweisen, wobei ein Riegel für die Breitenverstelleinrichtung und ein Riegel für die Höhenverstelleinrichtung vorgesehen sind.

Der Antriebsschlitten kann beispielsweise für die Verstellung der beiden Verstelleinrichtungen an einen Angriffspunkt an dem Führungsarm der zu verstellenden Seitenwand heranfahren und mit dem Riegel in den Angriffspunkt eingreifen. Beim Verfahren des Antriebsschlittens in diesem mit dem Führungsarm verbundenen Zustand wird nun der Führungsarm und somit die Seitenwand von dem Antriebsschlitten mitgeführt, so dass die Breitenverstellung erfolgt. Die Höhenverstellung kann in ähnlicher Weise erfolgen, indem der Antriebsschlitten mit dem Riegel an einem Angriffspunkt der Höhenverstelleinrichtung angreift.

Bei einer Höhenverstelleinrichtung mit einer verschwenkbar an der Rückwand gelagerten Platte kann vorgesehen sein, dass ein Langloch in der Platte angeordnet ist, in das der Riegel eingreift, so dass bei einer linearen Bewegung des Antriebsschlittens des Linearantriebs eine Verschwenkbewegung der Platte hervorgerufen wird, indem der Riegel in dem Langloch entlang gleitet.

Über den Antriebsschlitten mit dem mindestens einen Riegel lassen sich die Breitenverstelleinrichtung und die Höhenverstelleinrichtung auf einfache Art und Weise mittels eines gemeinsamen Antriebs betätigen.

Vorzugsweise ist vorgesehen, dass der Riegel beim Eingriff in die Breitenverstelleinrichtung die erste Rastvorrichtung löst. Die erste Rastvorrichtung kann beispielsweise über eine Federvorrichtung, beispielsweise eine Schraubenfeder oder Blattfeder fehlerbeaufschlagt sein, wobei bei einem Eingriff des Riegels in die Breitenverstelleinrichtung die erste Rastvorrichtung entgegen der Federkraft der Federvorrichtung gelöst wird.

In einem bevorzugten Ausführungsbeispiel der Erfindung ist vorgesehen, dass die erste Rastvorrichtung eine Betätigungsvorrichtung zur manuellen Betätigung der ersten Rastvorrichtung aufweist, die vorzugsweise einen am Stapelkanal angeordneten Betätiger aufweist. Dadurch lässt sich die erste Rastvorrichtung von der dem Benutzer zugewandten Seite der Wareneingabeeinrichtung lösen, so dass die Breitenverstelleinrichtung manuell betätigt werden kann. Dies ist notwendig, wenn beispielsweise bei einer Fehlbedienung der Warenübergabevorrichtung Waren in dem Stapelkanal verkanten oder steckenbleiben. Der Benutzer kann dann die Breite des Stapelkanals manuell verändern, um die in dem Stapelkanal blockierten Waren zu lösen. In dem Ausführungsbeispiel, bei dem die erste Rastvorrichtung eine Federvorrichtung aufweist, muss die Betätigungsvorrichtung zur manuellen Betätigung derart ausgestaltet sein, dass durch ein Betätigen die Rastvorrichtung entgegen der Federkraft der Federvorrichtung freigegeben wird.

Die erste Rastvorrichtung kann beispielsweise zwei Rastnasen aufweisen, die in eine Zahnstange eingreifen. Dadurch kann eine hohe Stabilität der Arretierung geschaffen werden, so dass es bei der normalen Bedienung der Warenübergabevorrichtung nicht zu einer versehentlichen Breitenverstellung des Stapelkanals kommen kann.

Vorzugsweise ist vorgesehen, dass die zweite Rastvorrichtung eine federbeaufschlagte Rastnase aufweist. Dabei ist die zweite Rastvorrichtung derart ausgebildet, dass die Arretierung der zweiten Rastvorrichtung durch eine Krafteinwirkung mit einer vorbestimmten Kraft zerstörungsfrei überwunden werden kann. Die federbeaufschlagte Rastnase besitzt somit die Funktion einer "Schnappverbindung". Da im normalen Betrieb die auf die Höhenverstelleinrichtung, beispielsweise durch die Waren, ausgeübte Kraft senkrecht zu der Verstellrichtung wirkt, ist das Vorsehen der zweiten Rastvorrichtung mit einer federbeaufschlagten Rastnase, die durch eine Krafteinwirkung zerstörungsfrei gelöst werden kann, ausreichend. Im normalen Betrieb erfolgt somit eine ungewollte Verstellung der Höhenverstelleinrichtung durch die von den Waren ausgeübte Kraft nicht. Bei der Verstellung der Höhe des Übergabekanals über die Höhenverstelleinrichtung, beispielsweise mittels eines Linearantriebs, wird von dem Linearantrieb die zur Überwindung der Arretierung notwendige Kraft aufgebracht. Ferner ermöglicht eine derart ausgebildete zweite Rastvorrichtung, dass die Höhenverstelleinrichtung auch auf einfache Art und Weise manuell betätigt werden kann, indem die Platte beispielsweise bei einem Verklemmen der Waren von dem Benutzer einfach nach oben gedrückt wird, wodurch ebenfalls die für die Überwindung der Arretierung notwendige Kraft aufgebracht werden kann.

Vorzugsweise ist vorgesehen, dass die Transportvorrichtung ein Nockenband aufweist. Das Nockenband kann beispielsweise in der Transportfläche angeordnet sein. Mittels des Nockenbandes können die Waren auf einfache Art und Weise auf der Transportfläche transportiert werden, indem diese mittels einer Nocke des Nockenbandes in Richtung zu der Ausgabeseite hin gedrückt werden. Dadurch wird in vorteilhafter Weise erreicht, dass jeweils nur die unterste Ware eines in dem Stapelkanal aufgenommenen Warenstapels in Richtung zu der Ausgabeseite hin transportiert wird.

Es kann vorgesehen sein, dass in einer Initialposition der Transportvorrichtung sich eine Nocke unterhalb der Rückwand des Stapelkanals bzw. unterhalb der Platte der Höhenverstelleinrichtung befindet. Dadurch wird verhindert, dass beim Eingeben von Waren in den Stapelkanal die unterste Ware, die auf der Transportfläche liegt, durch eine versehentliche Bewegung des Benutzers oder beispielsweise aufgrund der Schwerkraft ungewollt bereits in Richtung der Ausgabeseite rutscht.

In einem Ausführungsbeispiel der Erfindung ist vorgesehen, dass eine Ausgabeseite des Übergabekanals eine öffenbare Stauvorrichtung, insbesondere Stauplatte, angeordnet ist. Die Stauvorrichtung kann beispielsweise als Anschlag für zu der Ausgabeseite des Übergabekanals transportierten Waren dienen. Darüber hinaus kann mittels der Stauvorrichtung der gesamte durch den Übergabekanal gebildete Durchgang zu dem Warenlager gesperrt werden, so dass bei geschlossener Stauvorrichtung ein Zugriff durch die Ausgabeseite des Übergabekanals auf das Innere des Warenlagers verhindert wird. Dadurch wird eine Verletzungsgefahr des Bedieners deutlich reduziert, da dieser bei geschlossener Stauvorrichtung nicht in das Warenlager und somit nicht in den Verfahrweg eines Manipulators greifen kann.

Dabei kann vorgesehen sein, dass die Stauvorrichtung elektrisch angetrieben ist. Die Stauvorrichtung kann beispielsweise als verschiebbare Stauplatte ausgebildet sein.

Die Stauvorrichtung kann beispielsweise in einer Schließposition gesperrt sein, beispielsweise durch den elektrischen Antrieb. Ferner kann vorgesehen sein, dass an der Stauvorrichtung ein Sensor zur Erkennung der Schließstellung der Stauvorrichtung angeordnet ist.

Im Betrieb der Warenübergabevorrichtung kann beispielsweise vorgesehen sein, dass die Stauvorrichtung nur geöffnet wird, wenn ein Manipulator an der Ausgabeseite des Übergabekanals angeordnet ist. Ferner kann beispielsweise vorgesehen sein, dass der Manipulator nur in Bewegung gesetzt wird, wenn der Sensor zur Erkennung der Schließstellung der Stauvorrichtung die Schließposition der Stauvorrichtung sensiert. Dadurch kann eine besonders hohe Bedienersicherheit gewährleistet werden.

Bei der erfindungsgemäßen Warenübergabevorrichtung kann vorgesehen sein, dass die Transportfläche des Übergabekanals zu der Ausgabeseite hin gegenüber einer Horizontalfläche geneigt ist. Dadurch kann erreicht werden, dass die Transportvorrichtung nicht über die gesamte Länge des Übergabekanals angeordnet sein muss und die auf der Transportfläche zu transportierenden Waren dennoch schwerkraftbedingt zu der Ausgabeseite hin transportiert werden. Erfindungsgemäß ist vorgesehen, dass ein erster Abschnitt des Übergabekanals, in dem die Transportvorrichtung angeordnet ist, in einem ersten Winkel gegenüber der Horizontalfläche geneigt ist oder horizontal angeordnet ist, wohingegen ein zweiter Abschnitt der Transportfläche in einem zweiten Winkel gegenüber der Horizontalfläche geneigt ist, wobei der Neigungswinkel des zweiten Abschnitts größer ist als der Neigungswinkel des ersten Abschnitts. Dabei sollte der Stapelkanal über den ersten Abschnitt des Übergabekanals angeordnet sein, um zu gewährleisten, dass die Transportvorrichtung Waren aus dem Stapelkanal entlang der Transportfläche transportieren kann. Der Stapelkanal ist vorzugsweise in einem rechten Winkel zu dem Übergabekanal, jedoch zumindest in einem Winkelbereich zwischen 85° und 95°, angeordnet, um die in dem Stapelkanal anzuordnenden Waren derart zu stapeln, dass sie auf zuverlässige Art und Weise von der Transportvorrichtung in Richtung des Ausgabeendes des Übergabekanals transportiert werden können. Daher ist es von Vorteil, wenn der erste Abschnitt des Übergabekanals, über dem der Stapelkanal angeordnet ist, eine möglichst geringe Neigung gegenüber der Horizontalfläche aufweist, um zu verhindern, dass die Wareneingabeeinrichtung eine zu große Erstreckung in eine horizontale Richtung besitzt, wodurch der Platzbedarf der gesamten Warenübergabevorrichtung vergrößert werden würde.

In einem besonders bevorzugten Ausführungsbeispiel der Erfindung sind zwei oder mehrere Übergabekanäle vorgesehen, wobei vorzugsweise über jedem Übergabekanal ein Stapelkanal angeordnet ist. Dadurch ist ein besonders schnelles Eingeben von Waren in ein Warenlager über die erfindungsgemäße Warenübergabevorrichtung möglich, da in den mehreren Stapelkanälen unterschiedliche Ware eingegeben wird. Durch die mehreren Stapelkanäle kann somit eine Vielzahl von Waren zwischengelagert werden, die dann über die Übergabekanäle an die Ausgabeseite transportiert werden können. Dadurch ist die Warenübergabevorrichtung in besonders vorteilhafter Weise und sehr flexibel einsetzbar. Beispielsweise kann die Warenübergabevorrichtung in vorteilhafter Weise mit einem sehr schnell verfahrenen Manipulator, mit mehreren Manipulatoren und/oder mit einem Manipulator, der von zwei oder mehreren Übergabekanälen Waren übernimmt, kombiniert werden. Mittels der erfindungsgemäßen Warenübergabevorrichtung ist somit ein automatisches Warenlager auf besonders effektive Weise bedienbar.

Bei einem Ausführungsbeispiel der Erfindung, bei dem zwei oder mehrere Übergabekanäle mit jeweils einem Stapelkanal vorgesehen sind, kann vorgesehen sein, dass die zweite Führungsschienenvorrichtung zwei parallele Führungsschienen aufweist, wobei die Führungsschienen der Seitenwände zweier benachbarter Stapelkanäle jeweils über einen Führungsschlitten in unterschiedlichen Führungsschienen gelagert sind. Dadurch kann erreicht werden, dass die Führungslager an den Führungsschlitten mit einem großen horizontalen Abstand voneinander angeordnet sind, wodurch die Lagerung der Seitenwände und somit die Kippstabilität der Seitenwände verbessert ist. Die Führungsschlitten sind in diesem Fall relativ lang ausgestaltet, wobei durch das Anordnen der Führungsschlitten der Seitenwände zweier benachbarter Stapelkanäle in unterschiedlichen Führungsschienen verhindert wird, dass diese einander beim Verfahren der Seitenwände behindern. Es kann vorgesehen sein, dass in bestimmten Stellungen der Seitenwände die Führungsschlitten der Seitenwände zweier benachbarter Stapelkanäle teilweise nebeneinander angeordnet sind. Ferner kann sogar vorgesehen sein, dass die Führungsarme Öffnungen aufweisen, so dass die Führungsarme der Seitenwände zweier benachbarter Stapelkanäle wechselseitig von den Führungsschlitten der benachbarten Seitenwände durchdrungen werden.

Der Führungsarm kann somit mittels der ersten und der zweiten Führungsschienenvorrichtung in zwei unterschiedlichen Ebenen gelagert sein, wodurch eine sehr stabile Lagerung des Führungsarms und somit der Seitenwand des Stapelkanals geschaffen werden kann.

Die Erfindung betrifft ferner ein Warenlager mit einer erfindungsgemäßen Warenübergabevorrichtung.

Das Warenlager kann einen Manipulator aufweisen, der die Waren von der Ausgabeseite der Warenübergabevorrichtung übernimmt. Der Manipulator weist vorzugsweise eine Manipulatortransportfläche auf, die in eine Richtung zu dem Ausgabeende des Manipulators hin gegenüber der Horizontalfläche geneigt ist. Über den Manipulator kann in vorteilhafter Weise Ware von der Wareübergabevorrichtung übernommen werden und an Lagerplätze des Warenlagers überführt werden. Die Manipulatortransportfläche kann in die gleiche Richtung geneigt sein, wie zumindest ein Teil der Transportfläche des Übergabekanals der Warenübergabevorrichtung, vorzugsweise in einem gleichen Winkel. Dadurch können in vorteilhafter Weise die Waren von der Warenübergabevorrichtung schwerkraftbedingt auf die Transportfläche des Manipulators rutschen.

Das Warenlager kann mehrere als Kanallager ausgebildete Lagerflächen zur Lagerung der Waren aufweisen. Dabei ist vorzugsweise vorgesehen, dass die Lagerflächen in einer Richtung zu der Warenausgabe des Warenlagers hin gegenüber der Horizontalfläche geneigt sind. Vorzugsweise ist die Neigung der Lagerflächen in gleicher Richtung und im gleichen oder ähnlichen Winkel, wie die Neigung der Manipulatortransportfläche und/oder die Neigung zumindest eines Teils der Transportfläche der Warenübergabevorrichtung.

Die beiden Einstellungen des Stapelkanals mittels der Breitenverstelleinrichtung und/oder die Höhenverstellung des Übergabekanals mittels der Höhenverstelleinrichtung kann automatisch erfolgen. Dazu kann beispielsweise ein Lagercomputer vorgesehen sein, der vorgibt, welche Waren mittels der Warenübergabevorrichtung in das automatische Warenlager einzugeben sind und entsprechend die Breite eines Stapelkanals und/oder die Höhe eines Übergabekanals an die einzugebenden Waren anpasst. Auch ist es möglich, dass die Breiteneinstellung und/oder die Höheneinstellung von dem Bediener mittels eines Bedienboards eingegeben werden. Dies kann erfolgen, indem der Bediener die gewünschte Breite und/oder die gewünschte Höhe manuell eingibt oder indem er die Ware, die er mittels der Warenübergabevorrichtung in das Warenlager eingeben will, beispielsweise über einen Barcode, von dem Lagercomputer einlesen lässt, wobei dieser zuvor gespeicherte Höhen- und/oder Breitenwerte für die eingescannte Ware einstellt.

Im Folgenden wird unter Bezugnahme auf die nachfolgenden Figuren die Erfindung näher erläutert.

Es zeigen:
- Figur 1: eine schematische Vorderansicht einer erfindungsgemäßen Warenübergabevorrichtung,
- Figur 2: eine schematische Rückansicht einer erfindungsgemäßen Warenübergabevorrichtung,
- Figur 3: eine schematische Detailansicht der Höhenverstelleinrichtung des Übergabekanals und

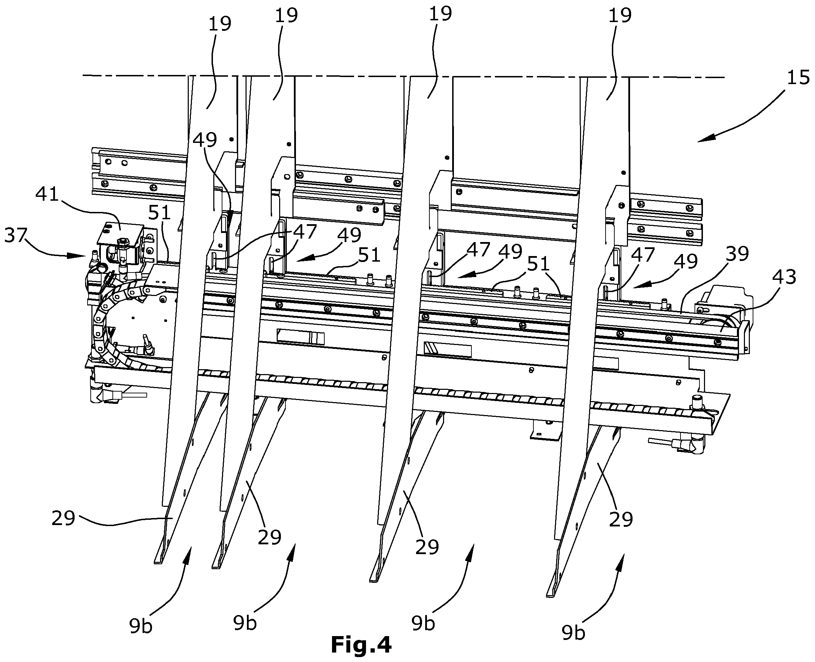

- Figur 4: eine schematische Detailansicht der Breitenverstelleinrichtung des Stapelkanals.

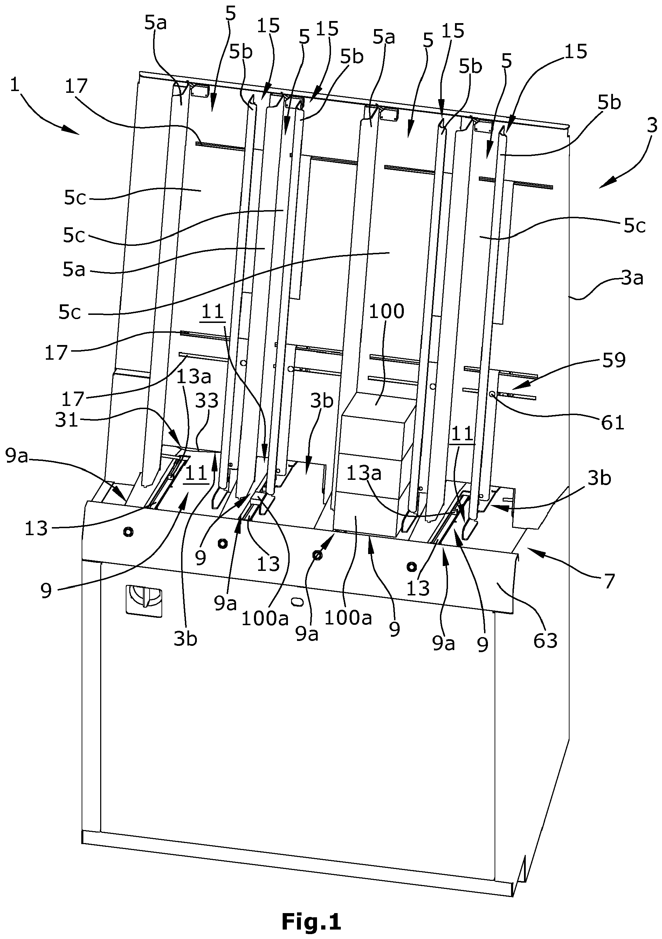

In Fig. 1 ist eine Ansicht auf eine erfindungsgemäße Warenübergabevorrichtung 1 von der Bedienerseite aus schematisch dargestellt. Die Warenübergabevorrichtung 1 dient zum Eingeben von Waren 100, 100a in ein nicht dargestelltes automatisches Warenlager.

Die in Fig. 1 dargestellte Warenübergabevorrichtung 1 weist eine Wareneingabeeinrichtung 3 auf, die in dem in Fig. 1 dargestellten Ausführungsbeispiel vier Stapelkanäle 5 umfasst, über die die Waren 100 zum Eingeben in die Warenübergabevorrichtung stapelbar sind.

Unterhalb der Wareneingabeeinrichtung ist eine Transporteinrichtung 7 angeordnet, die vier Übergabekanäle 9 aufweist. Die Übergabekanäle 9 sind jeweils unterhalb der Stapelkanäle 5 der Wareneingabeeinrichtung 3 angeordnet.

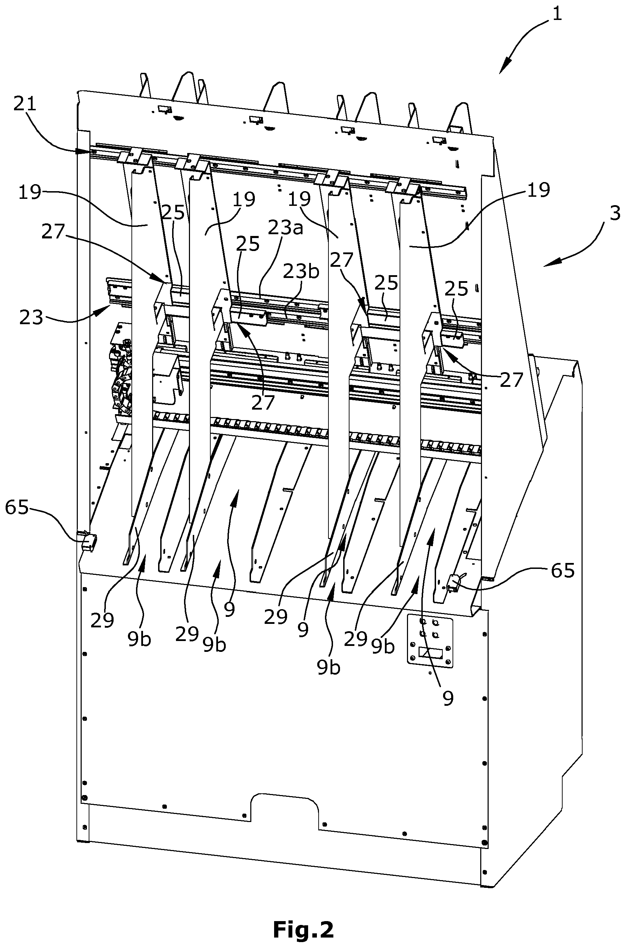

Jeder Übergabekanal 9 weist eine Transportfläche 11 auf, auf der die Waren 100, 100a von einer Eingabeseite 9a zu einer Ausgabeseite 9b (vgl. Fig. 2) transportiert werden können. Von der Ausgabeseite 9b aus werden die Waren an das nicht dargestellte Warenlager übergeben.

Die Transportflächen 11 der Übergabekanäle 9 bilden jeweils einen Boden der Stapelkanäle 5, so dass die unterste Ware 100a mehrerer Waren 100, die in einem Stapelkanal 5 gestapelt sind, auf der Transportfläche 11 des entsprechenden Übergabekanals 9 aufliegt.

In der Transportfläche 11 des Übergabekanals 9 ist eine Transportvorrichtung 13 angeordnet, die in dem in Fig. 1 dargestellten Ausführungsbeispiel als ein Nockenband ausgebildet ist, mittels dessen die auf der Transportfläche 11 aufliegende Ware 100a auf der Transportfläche 11 transportierbar ist, indem eine Nocke 13a des Nockenbandes gegen die Ware 100a drückt und die Ware 100a somit entlang des Übergabekanals 9 schiebt.

Die Stapelkanäle 5 weisen jeweils eine erste Seitenwand 5a, eine zweite Seitenwand 5b und eine Rückwand 5c auf. Mittels der ersten Seitenwand 5a, der zweiten Seitenwand 5b und der Rückwand 5c können die in dem Stapelkanal 5 aufgenommenen Waren 100 geführt werden, so dass diese in einem ordentlichen Stapel in dem Stapelkanal 5 angeordnet sind und nicht verkanten.

Die Rückwände 5c der Stapelkanäle 5 sind durch eine gemeinsame Wand 3a der Wareneingabeeinrichtung 3 gebildet. Im Bereich der Übergabekanäle 9 sind Aussparungen 3b der Wand vorgesehen, so dass die auf der Transportfläche 11 aufliegenden Waren 100a entlang des Übergabekanals 9 zu der Ausgabeseite 9b hin transportiert werden können. Beim Transport einer auf einer Transportfläche 11 aufliegenden Ware 100a wird diese aus dem in dem Stapelkanal 5 gebildeten Stapel von Waren 100 herausgedrückt und die übrigen Waren 100 in dem Stapelkanal rutschen schwerkraftbedingt nach, so dass wieder eine Ware 100a auf der Transportfläche 11 aufliegt.

Mittels der Warenübergabevorrichtung 1 ist es somit möglich, gestapelte Waren zu vereinzeln und in den Übergabekanal 9 in einer Reihe anzuordnen.

Jeder Stapelkanal 5 weist eine Breitenverstelleinrichtung 15 auf, mittels der die Breite des Stapelkanals 5 an unterschiedliche Warenbreiten anpassbar ist. Die zweite Seitenwand 5b ist dazu in Richtung zu der ersten Seitenwand 5a hin verschiebbar ausgeführt und bildet somit einen Teil der Breitenverstelleinrichtung 15. In Fig. 1 ist zu Veranschaulichungszwecken in dem zweiten Stapelkanal 5 von links eine sehr kleine Ware 100a gezeigt und in dem dritten Stapelkanal 5 von links sind relativ große Waren 100, 100a dargestellt.

In der Wand 3a der Wareneingabeeinrichtung 3, die die Rückwände 5c der Seitenkanäle 5 bildet, sind Schlitze 17 vorgesehen, durch die sich Führungsarme 19 erstrecken, wobei die Führungsarme 19 mit den verschiebbar ausgeführten zweiten Seitenwänden 5b verbunden sind. Über die Führungsarme 19, die am besten aus Fig. 2 ersichtlich sind, sind die zweiten Seitenwände 5b auf der von der Benutzerseite abgewandten Seite der Wareneingabeeinrichtung 3 gelagert.

Zur Lagerung der Führungsarme 19 ist eine erste Führungsschienenvorrichtung 21 und eine zweite Führungsschienenvorrichtung 23 vorgesehen, mittels der die Führungsarme 19 in zwei Ebenen lagerbar sind.

Ferner weist die zweite Führungsschienenvorrichtung 23 zwei Führungsschienen 23a und 23b auf, die parallel zueinander aneinander angrenzend angeordnet sind. In der zweiten Führungsschienenvorrichtung 23 sind die Führungsarme 19 jeweils über langgestreckte Führungsschlitten 25 gelagert. Die Führungsschlitten 25 weisen zwei voneinander beabstandete Führungslager auf, die in den Führungsschienen 23a, 23b geführt sind. Durch den Abstand in horizontaler Richtung und parallel zu den Rückwänden 5c zwischen den Führungslagern der Führungsschlitten 25 wird eine stabile Lagerung erreicht und insbesondere die Kippstabilität der Seitenwände 5b und der Führungsarme 19 wird erhöht. Dadurch ist eine sehr stabile Lagerung der zweiten Seitenwände 5b möglich.

Die zweite Führungsschienenvorrichtung weist die beiden Führungsschienen 23a und 23b auf, um zu gewährleisten, dass die zweiten Seitenwände 5b zweier benachbarter Stapelkanäle 5 an jede Position verschiebbar sind, ohne dass die Führungsschlitten 25 einander behindern. Daher ist vorgesehen, dass der Führungsschlitten 25 einer zweiten Seitenwand 5b eines ersten Stapelkanals 5 in der ersten Führungsschiene 23a der zweiten Führungsschienenvorrichtung gelagert ist und der Führungsschlitten 25 der zweiten Seitenwand 5b eines benachbarten zweiten Stapelkanals 5 in der zweiten Führungsschiene 23b der zweiten Führungsschienenvorrichtung.

Wie aus Fig. 2 ersichtlich ist, verlaufen die Führungsschlitten 25 der zweiten Seitenwände 5b zweier benachbarter Stapelkanäle 5 teilweise nebeneinander, wobei in den Führungsarmen 19 Öffnungen 27 vorgesehen sind, durch die der Führungsschlitten der Seitenwand 5b eines benachbarten Stapelkanals 5 hindurchgeführt werden kann. Dadurch wird erreicht, dass die Führungsschlitten in einer großen horizontalen Erstreckung ausgebildet werden können, wodurch der horizontale Abstand der Führungslager besonders groß und somit eine sehr stabile Lagerung gewährleistet werden kann.

An einem unteren Ende der Führungsarme 19 sind jeweils Übergabekanalseitenwände 29 des jeweiligen Übergabekanals 9 befestigt, wobei die Übergabekanalseitenwände 29 ebenfalls verschiebbar ausgebildet sind. Somit lässt sich über die Übergabekanalseitenwände 29 die Breite der Übergabekanäle 9 an die Warengröße der Waren 100, 100a anpassen. Durch die Verbindung der Übergabekanalseitenwände 29 mit den jeweiligen Führungsarmen 19 können somit die zweiten Seitenwände 5b der Stapelkanäle 5 und die Übergabekanalseitenwände 29 der Übergabekanäle 9 gleichzeitig verstellt werden.

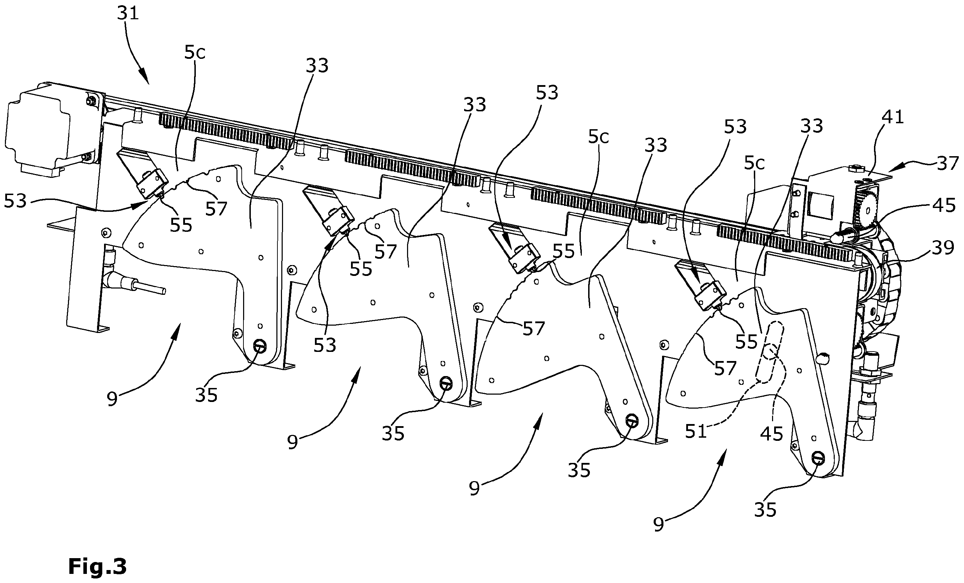

An dem Übergabekanal 9 ist eine Höhenverstelleinrichtung 31 angeordnet, über die die Höhe des Übergabekanals 9 in einem Abschnitt des Übergabekanals 9 verstellbar ist. Die Höhenverstelleinrichtung 31 weist, wie am besten aus Fig. 3 ersichtlich ist, eine Platte 33 auf, die verschwenkbar an der von dem Stapelkanal 5 abgewandten Seite an der Rückwand 5c jedes Stapelkanals 5 angeordnet ist. Über die Höhenverstelleinrichtung 31 wird sichergestellt, dass jeweils nur die auf der Transportfläche 11 aufliegende Ware 100a mittels der Transportvorrichtung 13 entlang des Übergabekanals 9 transportiert wird, da von der Rückwand 5c des jeweiligen Stapelkanals 5 sowie der Platte 33 der Höhenverstelleinrichtung 31 die darüber gestapelten Waren 100 zurückgehalten werden. Dadurch ist eine Vereinzelung der Waren 100 in vorteilhafter Weise möglich.

Die Platte 33 ist über ein Verschwenklager 35 gelagert, so dass die Höhenverstellung des Übergabekanals 9 durch ein einfaches Verschwenken der jeweiligen Platte 33 erfolgen kann. Auf der von dem Benutzer abgewandten Seite der die Rückwände 5c der Stapelkanäle bildenden Wand 3a der Wareneingabeeinrichtung 3 ist ferner ein Linearantrieb 37 angeordnet, der den Antrieb für die Breitenverstelleinrichtung 15 und die Höhenverstelleinrichtung 31 bildet. Der Linearantrieb 37 weist einen Riementrieb 39 auf, mittels dem ein Antriebsschlitten 41 entlang einer Antriebsschiene 43 verfahren werden kann. Der Antriebsschlitten 41 ist in horizontaler Richtung parallel zu den Rückwänden 5c der Stapelkanäle 5 verfahrbar.

An dem Antriebsschlitten 41 sind zwei Riegel 45 angeordnet, mittels derer der Antriebsschlitten 41 mit der Höhenverstelleinrichtung 31 und der Breitenverstelleinrichtung 15 koppelbar ist.

Für eine Kopplung des Antriebsschlittens 41 mit der Breitenverstelleinrichtung 15 greift ein Riegel 45 in Aussparungen 47 des Führungsarms 19 der zu verstellenden zweiten Seitenwand 5b eines Stapelkanals 5 ein. Durch die Kopplung mit dem Antriebsschlitten kann der Führungsarm 19 mit dem Antriebsschlitten 41 mitgeführt werden, wodurch der jeweilige Führungsarm 19 und somit die jeweilige zweite Seitenwand 5b verschoben werden kann.

Die Breitenverstelleinrichtung 15 weist ferner erste Rastvorrichtungen 49 auf, über die die Breite eines Stapelkanals 5 arretiert werden kann. Für jeden Führungsarm 19 besteht die Rastvorrichtung 49 jeweils aus einer Zahnstange 51, in die federbeaufschlagte Rastnasen eingreifen.

Um eine erste Rastvorrichtung 49 zu lösen, indem die Rastnasen aus der Zahnstange 51 heraus bewegt werden, ist in der Aussparung 47 des jeweiligen Führungsarms 19 ein nicht dargestellter Auslöser angeordnet, der von dem Riegel 45 des Antriebsschlittens 41 betätigt wird.

Bei einer Breitenverstellung eines Stapelkanals 5 wird somit sichergestellt, dass die Arretierung der ersten Rastvorrichtung 49 gelöst ist, da der Riegel 45, der eine Verbindung zwischen dem Linearantrieb 37 und dem Führungsarm 19 herstellt, gleichzeitig die Arretierung der ersten Rastvorrichtung 49 löst.

In vergleichbarer Weise wird auch die Höhenverstelleinrichtung 31 mittels des Linearantriebs 37 betätigt. Ein weiterer Riegel 45 des Antriebsschlittens 41 greift in ein Langloch 51 ein, das über eine Linearbewegung des Linearantriebs 37 in horizontaler Richtung eine Verschwenkbewegung der Platte 33 hervorgerufen werden kann.

Die Höhenverstelleinrichtung 31 weist ferner zweite Rastvorrichtungen 53 auf, die jeweils eine Rastnase 55 aufweisen, die in Vertiefungen 57 an den Außenkanten der Platten 33 eingreifen. Die Rastnasen sind federbeaufschlagt. Durch eine Krafteinwirkung, beispielsweise hervorgerufen durch den Linearantrieb 37, wird die Arretierung zerstörungsfrei überwunden.

Über die zweiten Rastvorrichtungen 53 wird sichergestellt, dass die für einen Übergabekanal 9 eingestellte Höhe nicht ungewollt verstellt wird.

Die erste Rastvorrichtung 49 weist auf der dem Benutzer zugewandten Seite der Wareneingabeeinrichtung 3 eine Betätigungsvorrichtung 59 mit einem an dem Stapelkanal 5 angeordneten Betätiger 61 auf. Über diesen Betätiger 61 lässt sich die erste Rastvorrichtung 49 manuell betätigen, um die Arretierung manuell zu lösen. Im Falle eines Verkantens von Waren 100 in dem Stapelkanal 5 kann der Bediener somit die zweite Seitenwand 5b eines Stapelkanals 5 manuell verschieben, um die verkanteten Waren 100 herauszunehmen.

Die erfindungsgemäße Warenübergabevorrichtung 1 kann ferner Sicherheitseinrichtungen aufweisen. Beispielsweise kann an der Eingabeseite 9a der Übergabekanäle 9 ein Schutzblech 63 angeordnet werden, das die Gefahr, dass der Benutzer mit seiner Hand an die Transportvorrichtung 13 gelangt, verringert. Ferner kann an der Ausgabeseite 9b eine elektrisch betätigbare, öffenbare Stauvorrichtung angeordnet sein, die in den Figuren nicht dargestellt ist. Mittels dieser Stauvorrichtung kann der Übergabekanal 9 in Richtung zu dem Warenlager versperrt werden. Da in einem Warenlager häufig Manipulatoren mit hoher Geschwindigkeit verfahren werden, kann durch die Stauvorrichtung verhindert werden, dass der Benutzer bei einer Fehlbedienung der Übergabevorrichtung 1, bei der er durch den Übergabekanal 9 greift, mit seiner Hand in einen Verfahrweg eines Manipulators gerät.

Ferner können an der Ausgabeseite 9b Sensoren 65 angeordnet sein, die beispielweise von der Warenübergabevorrichtung 1 auf einen Manipulator übergebene Gegenstände registrieren. Auch können die Sensoren 65 dazu dienen, festzustellen, ob eventuell eine Ware 100 zwischen dem Manipulator und dem Übergabekanal steckenbleibt, was eine Fortbewegung des Manipulators verhindern würde, oder ob die Stauvorrichtung geschlossen ist.

Die erfindungsgemäße Warenübergabevorrichtung 1 hat den Vorteil, dass eine Vielzahl von beweglichen Teilen, die eine Verletzung des Benutzers hervorrufen könnten oder die empfindlich sind, wie beispielsweise der Linearantrieb 37 oder die erste und die zweite Führungsschienenvorrichtung 21, 23 auf der von dem Benutzer abgewandten Seite an der Wareneingabeeinrichtung 3 angeordnet sind, wodurch Verletzungen des Benutzers oder etwaige Beschädigungen der empfindlichen Teile verhindert werden.

Der Übergabekanal 9 weist, wie beispielsweise in Fig. 2 ersichtlich ist, ein Gefälle auf. Dabei kann vorgesehen sein, dass das Gefälle der Transportfläche 11 in einem ersten Abschnitt, in dem die Transportvorrichtung 13 angeordnet ist, eine geringere Neigung aufweist, als in einem zweiten Abschnitt, der zu der Ausgabeseite 9b hin führt. Da in einem ersten Abschnitt die Transportvorrichtung 13 den Transport der Waren 100a übernimmt, ist in diesem Abschnitt kein allzu großes Gefälle notwendig. Im zweiten Abschnitt zu der Ausgabeseite 9b hin, in dem die Transportvorrichtung 13 nicht wirkt, ist ein größeres Gefälle von Vorteil, um einen schwerkraftbedingten Transport der Waren 100 zu der Ausgabeseite 9b hin zu gewährleisten. Das Gefälle der Transportfläche 11 in dem Abschnitt zu der Ausgabeseite 9b hin kann an ein Gefälle einer Manipulatortransportfläche eines Manipulators angepasst sein.

Die Nocken 13a der als Nockenband ausgebildeten Transportvorrichtung 13 sind, wie beispielsweise in Fig. 1 in dem ersten Übergabekanal 9 von links gezeigt ist, in einer Initialposition direkt unterhalb der Rückwand 5c und der Platte 33 des darüber angeordneten Stapelkanals 5. Dadurch wird verhindert, dass bereits beim Einlegen von Ware in den Stapelkanal 5 die unterste Ware entlang der Transportfläche 11 rutschen kann.

Die Breiteneinstellung der Stapelkanäle 5 mittels der Breitenverstelleinrichtung 15 und die Höheneinstellung der Übergabekanäle 9 mittels der Höhenverstelleinrichtung 31 kann automatisch erfolgen, wobei die Einstellung über einen Lagercomputer gesteuert wird. Dieser kann beispielsweise vorgeben, in welchen Stapelkanal welche Ware 100 einzugeben ist und die Breiten- und Höheneinstellung entsprechend vornehmen. Auch ist es möglich, dass der Bediener entscheidet, welche Ware in welchen Stapelkanal 5 eingelegt wird, wobei er vor dem Einlegen der Ware 100 beispielsweise einen Barcode einer Ware scannt, so dass der Lagercomputer erkennt, um welche Ware 100 es sich handelt. Der Lagercomputer übernimmt dann die Einstellung der Breite des Stapelkanals und der Höhe des Übergabekanals 9.

## Patentansprüche

1. Warenübergabevorrichtung (1) für ein automatisches Warenlager zum Eingeben von Waren (100) in das automatische Warenlager,
- mit mindestens einem Übergabekanal (9) mit einer Eingabeseite (9a) zum Eingeben von Waren (100) und einer Ausgabeseite (9b) zur Übergabe der Waren an das Warenlager,
wobei der Übergabekanal (9) eine Transportfläche (11) aufweist, auf der die Waren (100) von der Eingabeseite zu der Ausgabeseite transportierbar sind, wobei über dem Übergabekanal (9) eine Wareneingabeeinrichtung (3) mit mindestens einem Stapelkanal (5) angeordnet ist, in dem Waren stapelbar sind, wobei die Transportfläche (11) des Übergabekanals (9) einen Boden des Stapelkanals (5) bildet, und wobei in dem Übergabekanal (9) eine Transportvorrichtung (13) angeordnet ist, die eine auf der Transportfläche (11) liegende Ware (100a) in Richtung der Ausgabeseite (9b) transportiert, wobei der Übergabekanal (9) mindestens eine Übergabekanalseitenwand (29) aufweist, die zur Verstellung der Breite des Übergabekanals (9) verschiebbar ist,
**dadurch gekennzeichnet,**
**dass** ein erster Abschnitt des Übergabekanals (9), in dem die Transportvorrichtung (13) angeordnet ist, in einem ersten Winkel gegenüber einer Horizontalfläche zu der Ausgabeseite (9b) hin geneigt oder horizontal angeordnet ist, wohingegen ein zweiter Abschnitt in einem zweiten Winkel gegenüber der Horizontalfläche zu der Ausgabeseite (9b) hin geneigt ist, wobei der Neigungswinkel des zweiten Abschnitts größer ist als der Neigungswinkel des ersten Abschnitts.

2. Warenübergabevorrichtung nach Anspruch 1, **dadurch gekennzeichnet, dass** der Stapelkanal (5) eine Breitenverstelleinrichtung (15) aufweist, über die die Breite des Stapelkanals (5) an unterschiedliche Warengrößen anpassbar ist.

3. Warenübergabevorrichtung nach Anspruch 2, **dadurch gekennzeichnet, dass** eine erste und/oder eine zweite Seitenwand (5a,5b) des Stapelkanals (5) zur Breitenverstellung in Richtung der jeweils anderen Seitenwand verschiebbar ist.

4. Warenübergabevorrichtung nach einem der Ansprüche 1 bis 3, **dadurch gekennzeichnet, dass** der Übergabekanal (9) eine Höhenverstelleinrichtung (31) aufweist, über die die Höhe des Übergabekanals (9) in zumindest einem Abschnitt des Übergabekanals (9) an unterschiedliche Warenhöhen anpassbar ist, wobei vorzugsweise die Höhenverstelleinrichtung (31) eine Platte (33) aufweist, die an der Rückwand (5c) des Stapelkanals (5) angeordnet ist und in Richtung zu der Transportfläche (11) des Übergabekanals (9) verstellbar ist.

5. Warenübergabevorrichtung nach Anspruch 3 oder 4, **dadurch gekennzeichnet, dass** eine verschiebbar ausgebildete Seitenwand (5b) des Stapelkanals (5) mindestens einen Führungsarm (19) aufweist, der eine Rückwand (5c) des Stapelkanals (5) durchdringt und der auf der von dem Stapelkanal (5) abgewandten Seite der Wareneingabeeinrichtung (3) gelagert ist, wobei vorzugsweise der Führungsarm (19) in mindestens einer ersten Führungsschienenvorrichtung (21), vorzugsweise in einer ersten und einer zweiten Führungsschienenvorrichtung (21,23), gelagert ist.

6. Warenübergabevorrichtung nach einem der Ansprüche 2 bis 5, **dadurch gekennzeichnet, dass** die Breitenverstelleinrichtung (15) eine erste Rastvorrichtung (49) aufweist, mittels der die Breitenverstelleinrichtung (15) des Stapelkanals (5) in vorgegebenen Breitenschritten arretierbar ist.

7. Warenübergabevorrichtung nach einem der Ansprüche 4 bis 6, **dadurch gekennzeichnet, dass** die Höhenverstelleinrichtung (31) eine zweite Rastvorrichtung (53) aufweist, mittels der die Höhenverstelleinrichtung (31) des Übergabekanals (9) in vorgegebenen Höhenschritten arretierbar ist.

8. Warenübergabevorrichtung nach einem der Ansprüche 2 bis 7, **gekennzeichnet durch** einen Linearantrieb (37), der den Antrieb der Breitenverstelleinrichtung (15) und/oder der Höhenverstelleinrichtung (31) bildet, wobei vorzugsweise der Linearantrieb (37) einen Antriebsschlitten (41) aufweist, der auf der von dem Stapelkanal (5) abgewandten Seite an der Wareneingabeeinrichtung (3) verfahrbar ist.

9. Warenübergabevorrichtung nach Anspruch 8, **dadurch gekennzeichnet, dass** der Antriebsschlitten (41) mindestens einen Riegel (45) aufweist, der in die Breitenverstelleinrichtung (15) und/oder die Höhenverstelleinrichtung (31) eingreift, wobei vorzugsweise
der Riegel (45) beim Eingriff in die Breitenverstelleinrichtung (15) die erste Rastvorrichtung (49) löst.

10. Warenübergabevorrichtung nach einem der vorangegangenen Ansprüche, **dadurch gekennzeichnet, dass** die erste Rastvorrichtung (49) eine Betätigungsvorrichtung (59) zur manuellen Betätigung der ersten Rastvorrichtung (49) aufweist, die vorzugsweise einen am Stapelkanal (5) angeordneten Betätiger (61) aufweist.

11. Warenübergabevorrichtung nach einem der vorangegangenen Ansprüche, **dadurch gekennzeichnet, dass** die zweite Rastvorrichtung (53) eine federbeaufschlagte Rastnase (55) aufweist.

12. Warenübergabevorrichtung nach einem der Ansprüche 1 bis 11, **dadurch gekennzeichnet, dass** die Transportvorrichtung (13) ein Nockenband aufweist.

13. Warenübergabevorrichtung nach einem der Ansprüche 1 bis 12, **gekennzeichnet, durch** zwei oder mehrere Übergabekanäle (9), wobei über jedem Übergabekanal ein Stapelkanal (5) angeordnet ist.

14. Warenübergabevorrichtung nach Anspruch 13 **dadurch gekennzeichnet, dass** die zweite Führungsschienenvorrichtung (23) zwei parallele Führungsschienen (23a,23b) aufweist, wobei die Führungsarme (19) der zweiten Seitenwände (5b) zweier benachbarter Stapelkanäle (5) jeweils über einen Führungsschlitten (25) in unterschiedlichen Führungsschienen (23a,23b) gelagert sind.

15. Warenlager mit einer Warenübergabevorrichtung (1) nach einem der Ansprüche 1 bis 14.

## Claims

1. Goods transfer device (1) for an automatic storage system for feeding goods (100) into the automatic storage system,
- comprising at least one transfer channel (9) having a feed side (9a) for feeding goods (100) and a dispensing side (9b) for transferring the goods to the storage system,
wherein the transfer channel (9) has a transport surface (11) on which the goods (100) can be transported from the feed side to the dispensing side, wherein a goods feeding device (3) having at least one stacking channel (5), in which goods can be stacked, is arranged above the transfer channel (9), wherein the transport surface (11) of the transfer channel (9) forms a bottom of the stacking channel (5), and wherein there is arranged in the transfer channel (9) a transport device (13) which transports a goods item (100a) located on the transport surface (11) towards the dispensing side (9b),
**characterized in that**
the transfer channel (9) has at least one transfer channel side wall (29) displaceable to adjust the width of the transfer channel (9), and
that a first section of the transfer channel (9), in which the transport device (13) is arranged, is inclined under a first angle with respect to a horizontal surface or arranged horizontally towards the dispensing side (9b), whereas a second section is inclined under a second angle with respect to a horizontal surface towards the dispensing side (9b), wherein the inclination angle of the second section is larger than the inclination angle of the first section.

2. Goods transfer device of claim 1, **characterized in that** the stacking channel (5) has a width adjustment means (15) by which the width of the stacking channel (5) can be adapted to different sizes of goods

3. Goods transfer device of claim 2, **characterized in that**, for width adjustment, a first and/or a second side wall (5a, 5b) of the stacking channel (5) are displaceable in the direction of the respective other side wall.

4. Goods transfer device of one of claims 1 to 3, **characterized in that** the transfer channel (9) comprises a height adjustment means (31) by which the height of the transfer channel (9) can be adapted to different heights of goods in at least one section of the transfer channel (9), wherein the height adjustment means (31) preferably has a plate (33) arranged at the rear wall (5c) of the stacking channel (5) and adjustable in the direction towards the transport surface (11) of the transfer channel (9).

5. Goods transfer device of one of claims 3 or 4, **characterized in that** a displaceable side wall (5b) of the stacking channel (5) comprises at least one guide arm (19) penetrating the rear wall (5c) of the stacking channel (5) and being supported on the side of the goods feeding device (3) averted from the stacking channel (5), wherein the guide arm (19) is preferably supported in at least one first guide rail device (21), preferably in a first and a second guide rail device (21, 23).

6. Goods transfer device of one of claims 2 to 5, **characterized in that** the width adjustment means (15) has a first locking device (49) by which the width adjustment means (15) of the stacking channel (5) can be locked at predetermined width intervals.

7. Goods transfer device of one of claims 4 to 6, **characterized in that** the height adjustment means (31) has a second locking device (53) by means of which the height adjustment means (31) of the transfer channel (9) can be locked at predetermined height intervals.

8. Goods transfer device of one of claims 2 to 7, **characterized by** a linear drive (37) that forms the drive of the width adjustment means (15) and/or the height adjustment means (31), wherein the linear drive (37) preferably comprises a drive carriage (41) movable on the goods feeding device (3) on the side averted from the stacking channel (5).

9. Goods transfer device of claim 8 **characterized in that** the drive carriage (41) comprises at least one latch (45) that engages into the width adjustment means (15) and/or the height adjustment means (31), wherein the latch (45) preferably releases the first locking device (49) when engaging into the width adjustment means (15).

10. Goods transfer device of one of the preceding claims, **characterized in that** the first locking device (49) has an actuation device (59) for the manual actuation of the first locking device (49) which preferably comprises an actuator (61) arranged at the stacking channel (5).

11. Goods transfer device of one of the preceding claims, **characterized in that** the second locking device (53) comprises a spring-loaded locking lug (55).

12. Goods transfer device of one of claims 1 to 11, **characterized in that** the transport device (13) comprises a cam belt.

13. Goods transfer device of one of claims 1 to 12, **characterized by** two or more transfer channels (9), wherein a stacking channel (5) is arranged above each transfer channel.

14. Goods transfer device of claim 13, **characterized in that** the second guide rail device (23) has two parallel guide rails (23a, 23b), wherein the guide arms (19) of the second side walls (5b) of two adjacent stacking channels (5) are each supported in different guide rails (23a, 23b) by means of a guide carriage (25).

15. Storage system with a goods transfer device (1) of one of claims 1 to 14.

## Revendications

1. Dispositif de transfert de marchandises (1) pour un entrepôt automatique, destiné à l'introduction de marchandises (100) dans l'entrepôt automatique,
- avec au moins un conduit de transfert (9) avec un côté d'entrée (9a) destiné à l'introduction de marchandises (100) et un côté de sortie (9b) destiné au transfert des marchandises vers l'entrepôt,
le conduit de transfert (9) comportant une surface de transport (11) sur laquelle les marchandises (100) peuvent être transportées à partir du côté d'entrée vers le côté de sortie, un système d'introduction de marchandises (3) étant disposé au-dessus du conduit de transfert (9) avec au moins un conduit d'empilement (5) dans lequel des marchandises peuvent être empilées, la surface de transport (11) du conduit de transfert (9) formant un fond du conduit d'empilement (5), et un dispositif de transport (13) étant disposé dans le conduit de transfert (9) et transportant une marchandise (100a) située sur la surface de transport (11) en direction du côté de sortie (9b),
**caractérisé en ce que**
le conduit de transfert (9) comporte au moins une paroi latérale de conduit de transfert (29) qui peut être amenée à coulisser pour le réglage de la largeur du conduit de transfert (9),
et
**en ce qu'**un premier tronçon du conduit de transfert (9), dans lequel la surface de transport (13) est disposée, est incliné vers le côté de sortie (9b) en formant un premier angle par rapport à la surface horizontale ou est disposé horizontalement, tandis qu'au contraire un deuxième tronçon est incliné vers le côté de sortie (9b) en formant un deuxième angle par rapport à la surface horizontale, l'angle d'inclinaison du deuxième tronçon étant plus grand que l'angle d'inclinaison du premier tronçon.

2. Dispositif de transfert de marchandises selon la revendication 1, **caractérisé en ce que** le conduit d'empilement (5) comporte un système de réglage de la largeur (15) par le biais duquel la largeur du conduit d'empilement (5) peut être adaptée à différentes dimensions de marchandises.

3. Dispositif de transfert de marchandises selon la revendication 2, **caractérisé en ce qu'**une première et/ou une deuxième paroi latérale (5a, 5b) du conduit d'empilement (5) peut être amenée à coulisser en direction de l'autre paroi latérale respective en vue du réglage de la largeur.

4. Dispositif de transfert de marchandises selon l'une des revendications 1 à 3, **caractérisé en ce que** le conduit de transfert (9) comporte un système de réglage de la hauteur (31) par le biais duquel la hauteur du conduit de transfert (9) peut être adaptée à différentes hauteurs de marchandises dans au moins un tronçon du conduit de transfert (9), le système de réglage de la hauteur (31) comportant de préférence une plaque (33) qui est disposée sur la paroi arrière (5c) du conduit d'empilement (5) et qui peut être déplacée en direction de la surface de transport (11) du conduit de transfert (9) .

5. Dispositif de transfert de marchandises selon la revendication 3 ou 4, **caractérisé en ce qu'**une paroi latérale (5b) du conduit d'empilement (5) constituée de façon coulissante comporte au moins un bras de guidage (19) qui pénètre dans une paroi arrière (5c) du conduit d'empilement (5) et qui est supporté sur le côté du système d'introduction de marchandises (3) qui est éloigné du conduit d'empilement (5), le bras de guidage (19) étant de préférence supporté dans au moins un premier système de rail de guidage (21), de préférence dans un premier et un deuxième système de rail de guidage (21, 23).

6. Dispositif de transfert de marchandises selon l'une des revendications 2 à 5, **caractérisé en ce que** le système de réglage de la largeur (15) comporte un premier dispositif d'encliquetage (49) au moyen duquel le système de réglage de la largeur (15) du conduit d'empilement (5) peut être bloqué dans des pas de largeur prédéfinis.

7. Dispositif de transfert de marchandises selon l'une des revendications 4 à 6, **caractérisé en ce que** le système de réglage de la hauteur (31) comporte un deuxième dispositif d'encliquetage (53) au moyen duquel le système de réglage de la hauteur (31) du conduit de transfert (9) peut être bloqué dans des pas de hauteur prédéfinis.

8. Dispositif de transfert de marchandises selon l'une des revendications 2 à 7, **caractérisé par** un entraînement linéaire (37) qui forme l'entraînement du système de réglage de la largeur (15) et/ou du système de réglage de la hauteur (31), l'entraînement linéaire (37) comportant de préférence un chariot d'entraînement (41) qui peut être mis en mouvement sur le système d'introduction de marchandises (3) sur le côté éloigné du conduit d'empilement (5).

9. Dispositif de transfert de marchandises selon la revendication 8, **caractérisé en ce que** le chariot d'entraînement (41) comporte au moins un pêne (45) qui engrène dans le système de réglage de la largeur (15) et/ou dans le système de réglage de la hauteur (31),
le pêne (45) libérant de préférence le premier dispositif d'encliquetage (49) lors de l'engrènement dans le système de réglage de la largeur (15).

10. Dispositif de transfert de marchandises selon l'une des revendications précédentes, **caractérisé en ce que** le premier dispositif d'encliquetage (49) comporte un dispositif d'actionnement (59) destiné à l'actionnement manuel du premier dispositif d'encliquetage (49) qui comporte de préférence un actionneur (61) disposé sur le conduit d'empilement (5).

11. Dispositif de transfert de marchandises selon l'une des revendications précédentes, **caractérisé en ce que** le deuxième dispositif d'encliquetage (53) comporte un bec d'encliquetage (55) soumis à l'action d'un ressort.

12. Dispositif de transfert de marchandises selon l'une des revendications 1 à 11, **caractérisé en ce que** le dispositif de transport (13) comporte une courroie à came.

13. Dispositif de transfert de marchandises selon l'une des revendications 1 à 12, **caractérisé par** deux conduits de transfert (9) ou davantage, un conduit d'empilement (5) étant disposé au-dessus de chaque conduit de transfert.

14. Dispositif de transfert de marchandises selon la revendication 13, **caractérisé en ce que** le deuxième système de rail de guidage (23) comporte deux rails de guidage (23a, 23b) parallèles, les bras de guidage (19) des deuxièmes parois latérales (5b) de deux conduits d'empilement (5) voisins étant supportés respectivement par le biais d'un chariot de guidage (25) dans différents rails de guidage (23a, 23b).

15. Entrepôt avec un dispositif de transfert de marchandises (1) selon l'une des revendications 1 à 14.
